**Europäisches Patentamt**

**European Patent Office**

**Office européen des brevets**

(19)

(11) **EP 1 447 915 A1**

(12) **EUROPÄISCHE PATENTANMELDUNG**

(43) Veröffentlichungstag:
**18.08.2004 Patentblatt 2004/34**

(51) Int Cl.⁷: **H04B 1/707**

(21) Anmeldenummer: **03003439.1**

(22) Anmeldetag: **14.02.2003**

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(71) Anmelder: **SIEMENS AKTIENGESELLSCHAFT**
**80333 München (DE)**

(72) Erfinder:
- **Dieterich, Hans, Dr.**
  **89075 Ulm (DE)**
- **Frey, Thomas, Dr.**
  **89081 Ulm (DE)**
- **Schmid, Joachim**
  **89597 Munderkingen (DE)**
- **Schreyögg, Christoph, Dr.**
  **89073 Ulm (DE)**

(54) **Anordnung zur Funksignalentspreizung bei einem Funkkommunikationssystem mit Code-Vielfachzugriffsverfahren**

(57)     Die Erfindung betrifft eine Anordnung zur Funksignalentspreizung bei einem Funkkommunikationssystem mit Code-Vielfachzugriffsverfahren, bestehend aus einer Präambledetektionseinrichtung (PRDEC), einer Fingerentspreizeinrichtung (FENT) und einer Pfadbeobachtungs-/Pfadnachführeinrichtung (PBPN), bei der die jeweiligen Einrichtungen jeweils eine Serienschaltung, bestehend aus einer Korrelationseinrichtung zur Eingangschipentspreizung, einer Rotationseinrichtung zur Kompensation einer durch einen Empfängerfrequenzoffset verursachten Phasendrehung und einer kohärenten Accumulationseinrichtung zur Durchführung einer wiederholten kohärenten Addition aufweisen. Erfindungsgemäß beinhaltet jede Korrelationseinrichtung Mittel zur Durchführung einer gesättigten Signalentspreizung, jede Rotationseinrichtung Mittel zur Durchführung einer gesättigten Signalmultiplikation und jede kohärente Accumulationseinrichtung beinhaltet Mittel zur Durchführung einer gesättigten Bitschiebeoperation. Mit Hilfe der Sättigung werden jeweils gebildete komplexe Signale bitbreitenreduziert.

FIG 4

EP 1 447 915 A1

**Beschreibung**

Die Erfindung betrifft eine Anordnung zur Funksignalentspreizung bei einem Funkkommunikationssystem mit Code-Vielfachzugriffsverfahren gemäß dem Oberbegriff des Patentanspruchs 1.

Beim neu einzuführenden UMTS-FDD-Standard ist seitens einer als NodeB bezeichneten Basisstation Hardware zur Entspreizung von Teilnehmersignalen notwendig. Die Entspreizung ist aufgrund von aufwändigen Rechenoperationen nur mit Hilfe von kostenintensiver Hardware, die im allgemeinen eine Vielzahl von hochkomplexen anwenderspezifischen Bauelementen (ASIC) aufweist, zu realisieren. Insbesondere werden anwenderspezifische Bauelemente zur Verarbeitung von Signalen mit großen Bitbreiten benötigt.

Die Entspreizung von Teilnehmersignalen wird mit Hilfe von Algorithmen zur Präambledetektion, zur Fingerentspreizung und zur Pfadbeobachtung bzw. Pfadnachführung durchgeführt.

Mit Hilfe der Präambledetektion wird bei UMTS-FDD ein Aufbau eines Übertragungskanals eingeleitet. Dazu sendet eine Mobilstation ein vordefiniertes Nachrichtenformat, das einerseits eine sogenannte Präamble und andererseits einen der Präamble nachfolgenden Nachrichtenteil aufweist. Die Präambledetektion bestimmt eine in der Präamble enthaltene Signatur, die Information zur Decodierung des nachfolgenden Nachrichtenteils enthält. Außerdem wird mit Hilfe der Präambledetektion ein Verzögerungsleistungsdichtespektrum für einen Rake-Empfänger bestimmt, mit dessen Hilfe der Nachrichtenteil decodiert wird.

Mit Hilfe der Fingerentspreizung werden empfangene Datensymbole eines einzelnen Teilnehmers entspreizt.

Mit Hilfe der Pfadnachführung werden zusätzlich zur Fingerentspreizung zeitlich frühere und zeitlich spätere Datensymbole eines Kontrollkanals entspreizt und Informationen für eine Nachführung eines Fingerentspreiz-Zeitpunkts gewonnen. Bei der Pfadbeobachtung wird ein Verzögerungsleistungsdichtespektrum des Teilnehmers bestimmt und daraus eine zeitliche Lage für Finger des Rake-Receivers ermittelt.

Es ist Aufgabe der vorliegenden Erfindung, eine Schaltungsanordnung der eingangs genannten Art in der Weise auszubilden, dass die zur Entspreizung benötigten Algorithmen kostengünstig realisiert werden können.

Die Aufgabe der Erfindung wird durch die Merkmale des Patentanspruchs 1 gelöst. Vorteilhafte Weiterbildungen sind in den Unteransprüchen angegeben.

Mit Hilfe der erfindungsgemäßen Anordnung werden die zur Entspreizung benötigten Algorithmen bitgenau und kostengünstig in einem gemeinsamen anwenderspezifischen Bauelement, einem sogenannten ASIC, implementiert.

Bei der erfindungsgemäßen Anordnung werden Ressourcen dadurch eingespart, dass Bitbreiten von Signalen für einzelne Algorithmenstufen auf ein Minimum reduziert werden, wobei gleichzeitig Leistungseinbussen gegenüber einer Fliesskommaimplementierung vermieden werden.

Die reduzierten Bitbreiten ermöglichen die Implementierung der oben genannten Algorithmen zur Teilnehmersignalentspreizung in einem gemeinsamen ASIC-Baustein, der aufgrund der reduzierten Bitbreiten eine geringe Komplexität und eine geringe Gatteranzahl aufweist.

Im Folgenden wird ein Ausführungsbeispiel der vorliegenden Erfindung anhand einer Zeichnung näher erläutert. Dabei zeigen:

FIG 1      eine Präambledetektionseinrichtung einer erfindungsgemäßen Anordnung zur Funksignalentspreizung,

FIG 2      eine Fingerentspreizeinrichtung der erfindungsgemäßen Anordnung,

FIG 3      eine Pfadbeobachtungs-/Pfadnachführeinrichtung der erfindungsgemäßen Anordnung zur Funksignalentspreizung,

FIG 4      die in einem gemeinsamen ASIC-Bauelement realisierte erfindungsgemäße Anordnung zur Funksignalentspreizung unter Verwendung der in den Figuren FIG 1 bis FIG 3 beschriebenen Einrichtungen, und

FIG 5      eine Tabelle mit Konstanten eines bevorzugten Betragsbildungsverfahren für die in den Figuren FIG1 und FIG3 dargestellten Betragsbildungseinrichtungen.

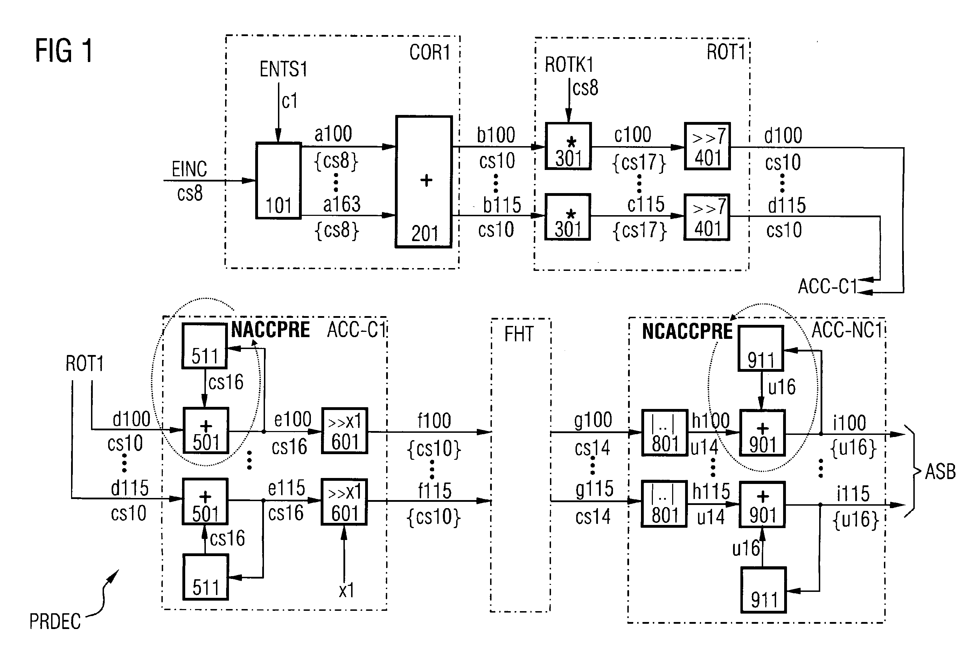

FIG 1 zeigt eine Präambledetektionseinrichtung PRDEC einer erfindungsgemäßen Anordnung zur Funksignalentspreizung, die seriell aufeinanderfolgend eine Correlationseinrichtung COR1, eine Rotationseinrichtung ROT1, eine kohärente Akkumulationseinrichtung ACC-C1, eine Einrichtung zur Fast-Hadamard-Transformation FHT und eine nicht kohärente Akkumulationseinrichtung ACC-NC1 aufweist.

Nachfolgend werden Abkürzungen für Zahlenformate binärer Signale angegeben, die in der weiteren Beschreibung verwendet werden:

csN :==      "complex signed", vorzeichenbehaftete Binärzahlen mit einer Wortlänge von $2*N$ Bit zur Darstellung komplexer Signale, denen für den Realteil mit einer Wortlänge von N Bit und für den Imaginärteil mit einer Wortlänge von N Bit jeweils ein binärer Wertebereich von $[-2^{N-1}; 2^{N-1}-1]$ zugeordnet ist,

{csN} :==      "complex signed - gesättigt", vorzeichenbehaftete Binärzahlen mit einer Wortlänge von $2*N$ Bit zur Darstellung komplexer "gesättigter" Signale, denen für den Realteil mit einer Wortlänge von N Bit und für den Imaginärteil mit einer Wortlänge von N Bit jeweils ein binärer Wertebereich von [$-2^{N-1}$; $2^{N-1}-1$] zugeordnet ist, wobei zur Sättigung einem Signal, dessen ursprünglicher Binärwert des Realteils bzw. des Imaginärteils den unteren Grenzwert $-2^{N-1}$ unterschreitet, der untere Grenzwert als neuer Binärwert fest zugeordnet wird und wobei einem Signal, dessen ursprünglicher Binärwert des Realteils bzw. des Imaginärteils den oberen Grenzwert $2^{N-1}-1$ überschreiten, der obere Grenzwert als neuer Binärwert fest zugeordnet wird,

uN :== positive Binärzahlen mit einer Wortlänge von N Bit und mit einem zugeordneten binären Wertebereich von [$0; 2^{N-1}$] zur Darstellung reeller Signale,

{uN} :== positive Binärzahlen mit einer Wortlänge von N Bit und mit einem zugeordneten binären Wertebereich von [$0; 2^{N-1}$] zur Darstellung reeller "gesättigter" Signale, wobei einem Signal, dessen ursprünglicher Binärwert den unteren Grenzwert 0 unterschreitet, der untere Grenzwert als neuer Binärwert fest zugeordnet wird und wobei einem Signal, dessen ursprünglicher Binärwert den oberen Grenzwert $2^N-1$ überschreitet, der obere Grenzwert als Binärwert fest zugeordnet wird, und

c1 :== zur Darstellung von Signalen einer Entspreizsequenz mit einem zugeordnetem Wertebereich von c1 $\in$ {1+j, - 1+j, 1-j, -1-j } .

Die Korrelationseinrichtung COR1 beinhaltet eine Entspreizeinrichtung 101 und eine erste Additionseinrichtung 201, wobei aus Antennendaten AD von Funksignalen gebildete komplexe Eingangschips EINC im Zahlenformat cs8 an die Entspreizeinrichtung 101 als Eingangssignale angeschaltet sind. Der Entspreizeinrichtung 101 wird ebenfalls eine Entspreizsequenz ENTS1 im Zahlformat c1 zugeführt, wobei mit Hilfe der Entspreizeinrichtung 101 die Eingangschips EINC entspreizt und auf das gesättigte Zahlenformat {cs8} abgebildet werden. Die Entspreizung erfolgt beispielsweise durch eine konjugiert komplexe Multiplikation der Entspreizsequenz ENTS1 mit den Eingangschips EINC, wobei im Ergebnis ein sogenanntes "Least-Significant-Bit" nicht weiterverwendet, d.h. verworfen, wird.

Wie oben beschrieben erhält ein entspreiztes Signal, dessen Binärwert des Realteils bzw. des Imaginärteils kleiner als der untere Grenzwert des binären Wertebereichs ist (hier also kleiner als $-2^{8-1}$ ist) als Binärwert den unteren Grenzwert $-2^{8-1}$ fest zugeordnet. Hingegen erhält ein entspreiztes Signal, dessen Binärwert des Realteils bzw. des Imaginärteils größer als der obere Grenzwert des binären Wertebereichs ist (hier also größer als $2^{8-1}$ ist) als Binärwert den oberen Grenzwert $2^{8-1}-1$ fest zugeordnet. Eine derartige Abbildung mit entsprechender Zuordnung wird als Sättigung bezeichnet.

Die Entspreizeinrichtung 101 bildet komplexe Signale a100 bis a163 im gesättigten Zahlformat {cs8}, die an die erste Additionseinrichtung 201 gelangen. Die Sättigung der komplexen Signale a100 bis a163 ist aufgrund einer stattfindenden Vorzeichenänderung, die durch die Entspreizung bedingt wird, notwendig.

Mit Hilfe der ersten Additionseinrichtung 201 werden jeweils vier der Signale a100 bis a163 gemäß folgender Formeln zu komplexen Signalen b100 bis b115 aufaddiert:

b100 = a100 + a116 + a132 + a148 ;

b101 = a101 + a117 + a133 + a149 ;

....

b115 = a115 + a131 + a147 + a163 .

Diese Additionen erfolgen ohne Genauigkeitsverlust und ohne Sättigung, so dass die ausgangsseitigen komplexen Signale b100 bis b115 der ersten Additionseinrichtung 201 das Zahlformat cs10 aufweisen und als Eingangssignale an die der Korrelationseinrichtung COR1 nachgeschaltete Rotationseinrichtung ROT1 gelangen. In der Rotationseinrichtung ROT1 wird eine durch einen Empfängerfrequenzoffset verursachte Phasendrehung kompensiert.

Die Rotationseinrichtung ROT1 weist für jedes der komplexen Signale b100 bis b115 jeweils einen Multiplikator 301 und eine dem Multiplikator 301 nachgeschaltete Bitschiebeeinrichtung 401 auf, wobei jedes einzelne der komplexen Signale b100 bis b115 an den jeweils zugeordneten Multiplikator 301 als Eingangssignal angeschaltet ist. Jedem einzelnen Multiplikator 301 sind als weitere Eingangssignale komplexe Rotationskoeffizienten ROTK1 im cs8-Zahlformat zugeführt.

Mit Hilfe der jeweiligen Multiplikatoren 301 werden komplexe Signale c100 bis c115 im gesättigten Zahlenformat {cs17} gemäß der Formeln:

c100 = b100 * ROTK1 ,

c101 = b101 * ROTK1 ,

c115 = b115 * ROTK1 .

gebildet, die den jeweiligen Bitschiebeeinrichtungen 401 zugeführt sind. Mit Hilfe einer 7-Bit-Shift-Right-Operation werden sogenannte "Least Significant Bits" der komplexen Signale c100 bis c115 verworfen und komplexe Signale d100 bis d115 im Zahlenformat cs10 erzeugt.

Die komplexen Signale d100 bis d115 gelangen als Eingangssignale an die der Rotationseinrichtung ROT1 nachgeschaltete kohärente Accumulationseinrichtung ACC-C1. Mit Hilfe der kohärente Accumulationseinrichtung ACC-C1 wird die Folge der komplexen Signale d100 bis d115 insgesamt NACCPRE-mal aufaddiert, wobei die Variable NACCPRE von außen einstellbar ist. Die Einrichtungen COR1 und ROT1 stellen die komplexen Signale d100 bis d115 für diese Addition entsprechend bereit.

Die kohärente Akkumulationseinrichtung ACC-C1 weist für jedes einzelne der komplexen Signale d100 bis d115 jeweils eine Additionseinrichtung 501, einen kohärenten Zwischenspeicher 511, der mit "0" vorbelegt ist, und eine Bitschiebeeinrichtung 601 auf.

Stellvertretend für die komplexen Signale d100 bis d115 betrachtet, ist das Signal d100 an die zugeordnete Additionseinrichtung 501 angeschaltet, mit deren Hilfe ein komplexes Signal e100 im Zahlenformat cs16 gebildet wird. Zur Durchführung der NACCPRE-maligen Addition ist die Additionseinrichtung 501 ausgangsseitig einerseits über den kohärenten Zwischenspeicher 511 zur Additionseinrichtung 501 zurückgeführt und andererseits an die Bitschiebeeinrichtung 601 angeschaltet. Das komplexe Signal e100 wird nach Durchführung einer NACCPRE-maligen Addition gebildet und an die Bitschiebeeinrichtung 601 geführt. Die Variable NACCPRE ist dabei von außen einstellbar.

Mit Hilfe der Bitschiebeeinrichtung 601 wird durch eine x1 Bit Shift-Right-Operation ein komplexes Signal f100 im gesättigten Zahlenformat {cs10} gebildet, wobei eine Anzahl von Bitschieboperationen über eine Variable x1 benutzerspezifisch von außen einstellbar ist.

Zusammenfassend werden aus den komplexen Signalen d100 bis d115 im Zahlenformat cs10 durch wiederholte Addition wiederum komplexe Signale f100 bis f115 im gesättigten Zahlenformat {cs10} gebildet, die als Eingangssignale an eine Einrichtung zur Fast-Hadamard-Transformation FHT angeschaltet sind.

Eine dort durchgeführte Fast-Hadamard-Transformation ist beispielsweise in "Principles of Spread Spectrum Communications", A.J.Viterbi, Addison Wesley, 1995, näher erläutert. Die Einrichtung zur Fast-Hadamard-Transformation FHT bildet ohne Genauigkeitsverlust komplexe Signale g100 bis g115 im Zahlenformat cs14, die als Eingangssignale an die nichtkohärente Akkumulationseinrichtung ACC-NC1 angeschaltet sind. Mit Hilfe der nichtkohärente Akkumulationseinrichtung ACC-NC1 wird eine Folge von aus den komplexen Signale g100 bis g115 gewonnener reeller Signale h100 bis h115 insgesamt NCACCPRE-mal betragsmäßig aufaddiert, wobei die Variable NCACCPRE von außen einstellbar ist. Die vorherigen Einrichtungen stellen die komplexen Signale g100 bis g115 entsprechend für die wiederholte Addition bereit.

Die nichtkohärente Akkumulationseinrichtung ACC-NC1 weist für jedes komplexe Signal g100 bis g115 jeweils eine Betragsbildungseinrichtung 801, eine Additionseinrichtung 901 und einen Zwischenspeicher 911 auf, der mit "0" vorbelegt ist.

Stellvertretend für die komplexen Signale g100 bis g115 betrachtet, gelangt das komplexe Signal g100 im Zahlenformat cs14 an die Betragsbildungseinrichtung 801, mit deren Hilfe ein reelles Signal h100 im Zahlenformat u14 gebildet wird.

Die Betragsbildung erfolgt beispielsweise durch die nachfolgend beschriebene Näherung:
Bei einem komplexen Signal mit einem Realteil I und einem Imaginärteil Q gilt zur Schätzung des Signalbetrags Mag näherungsweise:

$$Mag \cong Alpha * max(|I|, |Q|) + Beta * min(|I|, |Q|)$$

Dabei sind "Alpha" und "Beta" Konstanten, deren Werte in Abhängigkeit eines zulässigen RMS-Fehlers, eines "peak errors" oder in Abhängigkeit einer Komplexität einer Implementierung wählbar sind.

Die oben dargestellte Absolutwertoperation "faltet" gewissermaßen ein komplexes Signal in einen Bereich von 0°-90° und die durchgeführte Min- bzw. Max-Operation "faltet" gewissermaßen das komplexe Signal in einen Bereich von 0°-45°. Innerhalb dieser Grenzen ist eine lineare Kombination des Realteils I mit dem Imaginärteil Q eine gute Näherung an die Signalamplitude Mag.

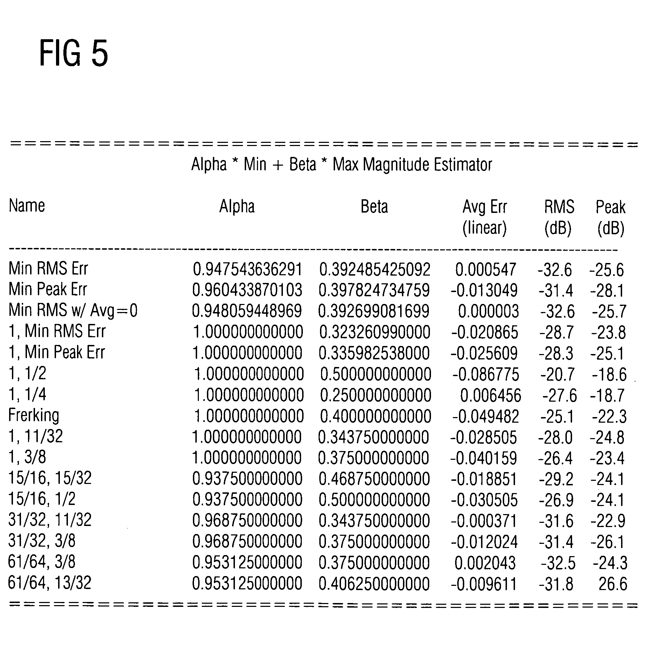

Mit Hilfe eines Programms wurden beispielsweise die nachfolgend in FIG5 angegebenen Werte für Alpha und Beta ermittelt. Nähere Informationen zur beschriebenen Betragsbildung sind beispielsweise dem Internet entnehmbar unter

www.dspguru.com/comp.dsp/tricks/alg_mag_est.htm.

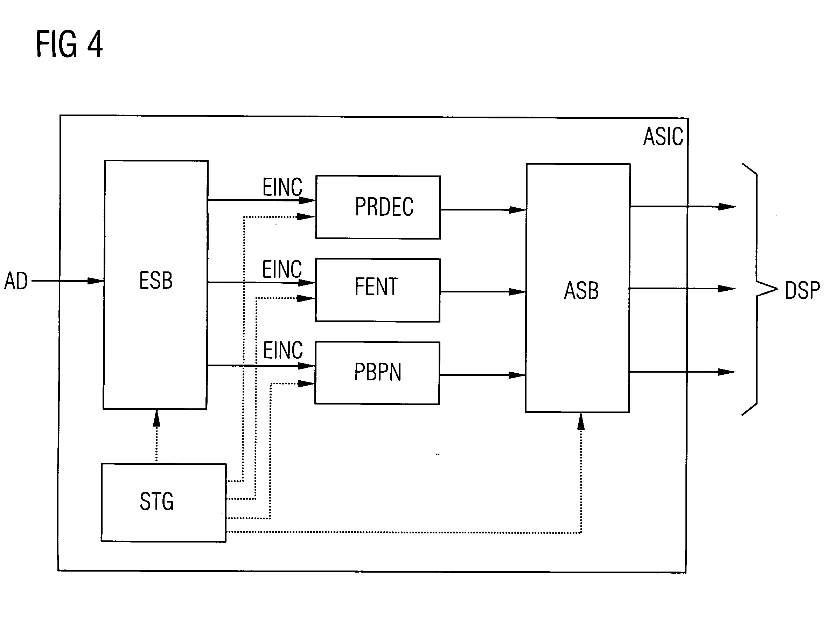

Nach erfolgter Betragsbildung wird das reelle Signal h100 der Additionseinrichtung 901 zugeführt und nach Durchführung einer NCACCPRE-maligen Addition ein reelles Signal i100 im gesättigten Zahlenformat {u16} gebildet. Zur Durchführung der NCACCPRE-maligen Addition ist die Addiereinrichtung 901 ausgangseitig über den Zwischenspeicher 911 an die Additionseinrichtung 901 zurückgeführt. Das reelle Signal i100 gelangt zusammen mit weiteren entsprechend aus den Signalen g101 bis g115 gebildeten Signalen i101 bis i115 über einen in FIG 4 beschriebenen Ausgangsschnittstellenblock ASB an einen digitalen Signalprozessor DSP zur weiteren Verarbeitung.

Jedes einzelne reelle Signal i100 bis i115 entspricht einem Korrelationsergebnis von einer von sechzehn Präamblesignaturen, wobei mit Hilfe des digitalen Signalprozessors DSP eine gesendete Signatur und ein Verzögerungsleistungsdichtespektrum vollends detektiert wird.

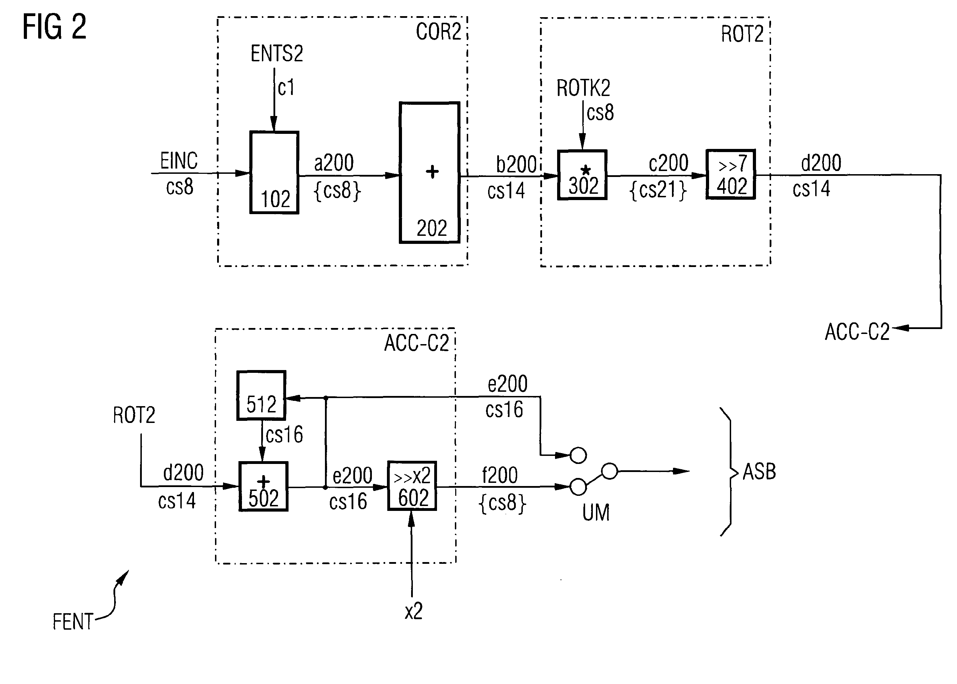

FIG 2 zeigt eine Fingerentspreizeinrichtung FENT einer erfindungsgemäßen Anordnung zur Funksignalentspreizung, die seriell aufeinanderfolgend eine Korrelationseinrichtung COR2, eine Rotationseinrichtung ROT2 und eine kohärente Akkumulationseinrichtung ACC-C2 aufweist. Die Fingerentspreizeinrichtung FENT ist zur Verarbeitung von Spreizfaktoren SF∈{4, 8, 16, 32, 64, 128, 256} vorgesehen.

Die Korrelationseinrichtung COR2 beinhaltet eine Entspreizeinrichtung 102 und eine erste Additionseinrichtung 202, wobei aus Antennendaten von Funksignalen gebildete komplexe Eingangschips EINC im Zahlenformat cs8 an die Entspreizeinrichtung 102 als Eingangssignale angeschaltet sind. Der Entspreizeinrichtung 102 wird ebenfalls eine Entspreizsequenz ENTS2 im Zahlenformat c1 zugeführt, wobei mit Hilfe der Entspreizeinrichtung 102 die Eingangschips EINC entspreizt und auf das gesättigte Zahlenformat {cs8} abgebildet werden. Die Entspreizung erfolgt beispielsweise durch eine konjugiert komplexe Multiplikation der Entspreizsequenz ENTS2 mit den Eingangschips EINC, wobei im Ergebnis ein sogenanntes "Least-Significant-Bit" nicht weiterverwendet, d.h. verworfen, wird.

Wie oben beschrieben, werden einem entspreizten Signal, dessen Binärwert des Realteils bzw. des Imaginärteils kleiner als $-2^{8-1}$ ist, als Binärwert der untere Grenzwert $-2^{8-1}$ fest zugeordnet, während einem entspreizten Signal, dessen Binärwert des Realteils bzw. des Imaginärteils größer als $2^{8-1}-_1$ ist, als Binärwert der obere Grenzwert $2^{8-1}-1$ fest zugeordnet wird.

Abhängig vom Spreizfaktor SF gelangen insgesamt

NACCFENT = min (SF,64) ausgangsseitige komplexe Signale a200 der Entspreizeinrichtung 102 im gesättigten Zahlformat {cs8} an die erste Additionseinrichtung 202. Die Sättigung der komplexen Signale a200 wird durch die Entspreizung bedingt.

Bei einem Spreizfaktor SF=4 werden beispielsweise vier aufeinanderfolgende entspreizte Eingangschips zum komplexen Signal a200 zusammengefasst, das an den ersten Accumulator 202 gelangt.

Mit Hilfe der ersten Additionseinrichtung 202 werden die NACCFENT komplexen Signale a200 in Abhängigkeit vom Spreizfaktor SF zu einem komplexen Signal b200 im Zahlenformat cs14 aufaddiert, wobei diese Additionen ohne Genauigkeitsverlust und ohne Sättigung erfolgt.

Das komplexe Signal b200 gelangt als Eingangssignal an die der Korrelationseinrichtung COR2 nachgeschaltete Rotationseinrichtung ROT2, in der eine durch einen Empfängerfrequenzoffset verursachte Phasendrehung kompensiert wird.

Die Rotationseinrichtung ROT2 besteht aus einem Multiplikator 302, dem eingangsseitig das komplexe Signal b200 zugeführt wird, und aus einer dem Multiplikator 302 nachgeschalteten Bitschiebeeinrichtung 402. Dem Multiplikator 302 sind als weitere Eingangssignale komplexe Rotationskoeffizienten ROTK2 im Zahlenformat cs8 zugeführt.

Mit Hilfe des Multiplikators 302 wird gemäß der Formel c200 = b200 * ROTK2 ein gesättigtes komplexes Signal c200 im gesättigten Zahlenformat {cs21} gebildet, das der Bitschiebeeinrichtung 402 zugeführt ist. Mit dessen Hilfe erfolgt eine 7-Bit-Shift-Right-Operation, wobei sogenannte "Least Significant Bits" des komplexen Signals c200 verworfen werden.

Das mit Hilfe der Bitschiebeeinrichtung 402 gebildete komplexe Signal d200 gelangt als Eingangssignal an die der Rotationseinrichtung ROT2 nachgeschaltete kohärente Accumulationseinrichtung ACC-C2.

Mit Hilfe der kohärenten Accumulationseinrichtung ACC-C2 wird für Spreizfaktoren SF=128 und SF=256 am komplexen Signal d200 eine zweifache bzw. vierfache Akkumulation durchgeführt. Für alle weiteren Spreizfaktoren SF wird für das eingangsseitige komplexe Signal d200 nur eine Bitbreitenanpassung durchgeführt.

Die kohärente Akkumulationseinrichtung ACC-C2 weist für das komplexe Signal d200 eine Additionseinrichtung 502, einen kohärenten Zwischenspeicher 512, der mit "0" vorbelegt ist, und eine Bitschiebeeinrichtung 602 auf.

Das komplexe Signal d200 ist an die Additionseinrichtung 502 angeschaltet, die ausgangsseitig über den kohärenten Zwischenspeicher 512 zur Additionseinrichtung 502 zurückgeführt und andererseits an die Bitschiebeeinrichtung 602 angeschaltet ist.

Ein durch Addition gebildetes komplexes Signal e200 im Zahlenformat cs16 gelangt an die Bitschiebeeinrichtung 602, mit deren Hilfe eine x2 Bit Shift-Right-Operation zur Bildung eines komplexen Signals f200 im gesättigten Zahlenformat {cs8} durchgeführt wird. Die Anzahl von Bitschieboperationen ist über eine Variable x2 benutzerspezifisch von außen einstellbar.

Bei einem Spreizfaktoren SF=128 werden zwei Additionen und bei einem Spreizfaktor SF=256 werden vier Additionen mit Hilfe der Additionseinrichtung 502 und mit Hilfe des Zwischenspeichers 512 durchgeführt. Für die Spreizfaktoren SF=4, 8, 16, 32 und 64 wird nur ein Additionsdurchgang in der Additionseinrichtung 502 mit Hilfe des mit "0" vorbelegten Zwischenspeichers 512 durchgeführt. Dadurch erfolgt hier eine Bitbreitenvergrößerung des komplexen Signals d200 bzw. eine Umsetzung des dem komplexen Signal d200 zugeordneten Zahlenformats cs14 auf das dem komplexen Signal e200 zugeordnete Zahlenformat cs16.

Zusammenfassend wird aus dem komplexen Signal d200 im Zahlenformat cs14 ein komplexes Signal f200 im Zahlenformat {cs8} gebildet, das über eine von außen steuerbare Umschalteinrichtung UM an den in FIG 4 beschriebenen Ausgangsschnittstellenblock ASB gelangt. In einer zweiten Schaltstellung der Umschalteinrichtung UM wird dem Ausgangsschnittstellenblock ASB wahlweise das komplexe Signal e200 im Zahlenformat cs16 zugeführt.

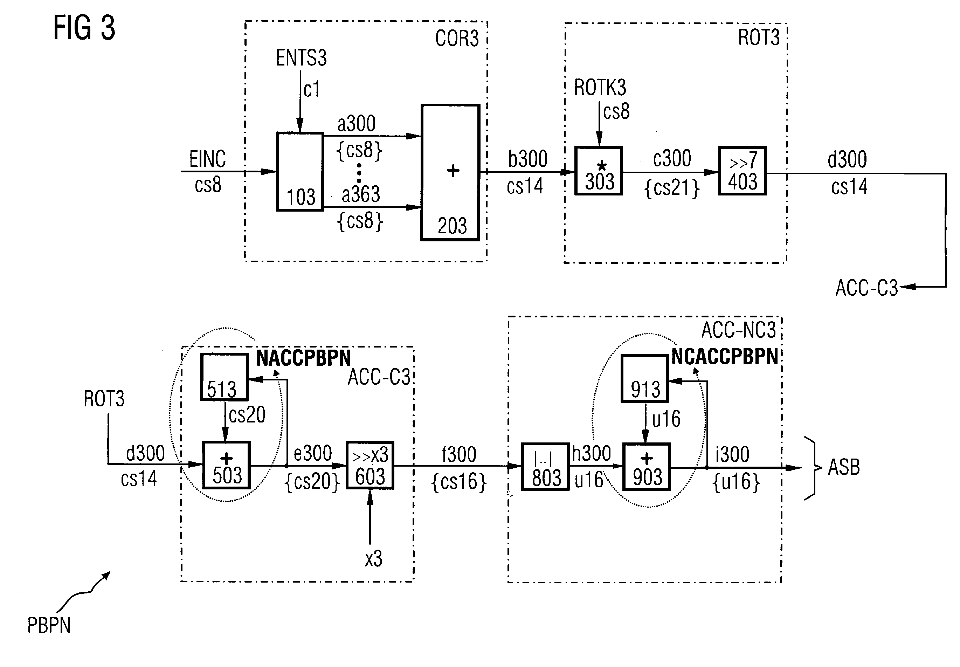

FIG 3 zeigt eine Pfadbeobachtungs-/Pfadnachführeinrichtung PBPN der erfindungsgemäßen Anordnung zur Funksignalentspreizung, die seriell aufeinanderfolgend eine Korrelationseinrichtung COR3, eine Rotationseinrichtung ROT3, eine kohärente Akkumulationseinrichtung ACC-C3 und eine nichtkohärente Akkumulationseinrichtung ACC-NC3 aufweist.

Die Korrelationseinrichtung COR3 beinhaltet eine Entspreizeinrichtung 103 und eine erste Additionseinrichtung 203, wobei aus Antennendaten von Funksignalen gebildete komplexe Eingangschips EINC im Zahlenformat cs8 als Eingangssignal an die Entspreizeinrichtung 103 angeschaltet sind. Der Entspreizeinrichtung 103 wird außerdem eine Entspreizsequenz ENTS3 im Zahlformat c1 zugeführt, wobei mit Hilfe der Entspreizeinrichtung 103 die Eingangschips EINC entspreizt und auf das gesättigte Zahlenformat {cs8} abgebildet werden.

Die Entspreizung erfolgt beispielsweise durch eine konjugiert komplexe Multiplikation der Entspreizsequenz ENTS3 mit den Eingangschips EINC, wobei im Ergebnis ein sogenanntes "Least-Significant-Bit" nicht weiterverwendet, d.h. verworfen, wird.

Wie oben beschrieben werden entspreizten Signalen, deren Binärwert des Realteils bzw. des Imaginärteils kleiner als $-2^{8-1}$ ist, als Binärwert der untere Grenzwert $-2^{8-1}$ fest zugeordnet, während entspreizten Signalen, deren Binärwert des Realteils bzw. des Imaginärteils größer als $2^{8-1}-1$ ist, als Binärwert der obere Grenzwert $2^{8-1}-1$ fest zugeordnet wird.

Jeweils 64 ausgangsseitige komplexe Signale a300 bis a363 der Entspreizeinrichtung 103 gelangen an die erste Additionseinrichtung 203. Die Sättigung der Signale a300 bis a363 ist aufgrund der Entspreizung notwendig.

Mit Hilfe der ersten Additionseinrichtung 203 wird eine Addition der Signale a300 bis a363 zu einem Signal b300 durchgeführt, das ein Zahlenformat cs14 aufweist und das als Eingangssignal an die der Korrelationseinrichtung COR3 nachgeschaltete Rotationseinrichtung ROT3 gelangt. In der Rotationseinrichtung ROT3 wird eine durch einen Empfängerfrequenzoffset verursachte Phasendrehung kompensiert.

Die Rotationseinrichtung ROT3 besteht aus einem Multiplikator 303, dem eingangsseitig das komplexe Signal b300 zugeführt wird und aus einer dem Multiplikator 303 nachgeschalteten Bitschiebeeinrichtung 403. Dem Multiplikator 303 sind als weitere Eingangssignale Rotationskoeffizienten ROTK3 im Zahlformat cs8 zugeführt.

Mit Hilfe des Multiplikators 303 wird gemäß der Formel c300 = b300 * ROTK3 ein komplexes Signal c300 im gesättigten Zahlenformat {cs21} gebildet, das an die Bitschiebeeinrichtung 403 angeschaltet ist. Mit deren Hilfe wird eine 7-Bit-Shift-Right-Operation durchgeführt, wodurch die "Least Significant Bits" des komplexen Signals c300 verworfen werden.

Ein mit Hilfe der Bitschiebeeinrichtung 403 gebildetes komplexes Signal d300 im Zahlenformat cs14 gelangt als Eingangssignal an die der Rotationseinrichtung ROT3 nachgeschaltete kohärente Accumulationseinrichtung ACC-C3. Mit Hilfe der kohärente Accumulationseinrichtung ACC-C3 wird das Signal d300 insgesamt NACCPBPN-mal aufaddiert, wobei die Variable NACCPBPN von außen einstellbar ist. Die vorherigen Einrichtungen stellen das komplexe Signal d300 entsprechend zur Addition bereit.

Die kohärente Akkumulationseinrichtung ACC-C3 weist eine Additionseinrichtung 503, einen kohärenten Zwischenspeicher 513, der mit "0" vorbelegt ist, und eine Bitschiebeeinrichtung 603 auf.

Das komplexe Signal d300 ist an die Additionseinrichtung 503 angeschaltet, mit deren Hilfe nach NACCPBPN-maliger Addition ein komplexes Signal e300 im gesättigten Zahlenformat {cs20} gebildet wird. Zur Durchführung der NACCPBPN-maligen Addition ist die Additionseinrichtung 503 ausgangseitig über den kohärenten Zwischenspeicher 513 zur Additionseinrichtung 503 zurückgeführt.

Das komplexe Signal e300 gelangt an die Bitschiebeeinrichtung 603, mit deren Hilfe eine x3 Bit Shift-Right-Operation durchgeführt und ein komplexes Signal f300 im gesättigten Zahlenformat {cs16} gebildet wird. Die jeweilige Anzahl von Bitschieboperationen ist über eine Variable x3 benutzerspezifisch von außen einstellbar.

Das komplexe Signal f300 gelangt als Eingangssignal an die nichtkohärente Akkumulationseinrichtung ACC-NC3. Mit Hilfe der nichtkohärenten Akkumulationseinrichtung ACC-NC3 wird ein aus dem komplexen Signal f300 gewonnenes reelles Signal h300 insgesamt NCACCPBPN-mal aufaddiert, wobei die Variable NCACCPBPN von außen einstellbar ist. Die vorherigen Einrichtungen stellen das komplexe Signal f300 entsprechend für die wiederholte Addition bereit.

Die nichtkohärente Akkumulationseinrichtung ACC-NC3 weist eine Betragsbildungseinrichtung 803, eine Additionseinrichtung 903 und einen Zwischenspeicher 913 auf. Das komplexe Signal f300 gelangt an die Betragsbildungseinrichtung 803, mit deren Hilfe das reelle Signal h300 im Zahlenformat u16 gebildet wird. Die Betragsbildung erfolgt dabei beispielsweise wie vorstehend in FIG1 beschrieben.

Nach erfolgter Betragsbildung wird das reelle Signal h300 der Additionseinrichtung 903 zugeführt und ein nach NCACCPBPN-maliger Addition gebildetes reelles Signal i300 im gesättigten Zahlenformat {u16} gebildet. Zur Durchführung der NACCPBPN-maligen Addition ist die Additionseinrichtung 903 ausgangsseitig über den Zwischenspeicher 913 zur Additionseinrichtung 903 zurückgeführt. Das reelle Signal i300 gelangt über den in FIG 4 beschriebenen Ausgangsschnittstellenblock ASB an einen digitalen Signalprozessor DSP.

Das komplexe Signal i300 ist mit verschiedenen Eingangschipsequenzen generierbar, um ein geeignetes Verzögerungsleistungsdichtespektrum zu erhalten, bzw. um frühere und spätere Pfadbeobachtungsergebnisse bzw. Pfadnachführungsergebnisse zu erhalten.

FIG 4 zeigt eine erfindungsgemäße Anordnung zur Funksignalentspreizung in einem ASIC-Bauelement ASIC für ein Funkkommunikationssystem mit Code-Vielfachzugriffsverfahren unter Verwendung der in den Figuren FIG 1 bis FIG 3 beschriebenen Präambledetektionseinrichtung PRDEC, Fingerentspreizeinrichtung FENT und Pfadbeobachtungs-/Pfadnachführeinrichtung PBPN.

Das anwenderspezifische Bauelement ASIC weist einen Eingangsschnittstellenblock ESB, einen Ausgangsschnittstellenblock ASB, die Präambledetektionseinrichtung PRDEC, die Fingereinspreizeinrichtung FENT, die Pfadbeobachtungs-/Pfadnachführeinrichtung PBPN und eine Steuereinrichtung STG auf.

Dem Eingangsschnittstellenblock ESB sind Antennendaten AD von Funksignalen zugeführt, die mit Hilfe des Eingangsschnittsellenblocks ESB in Eingangchips EINC umgesetzt werden.

Die Eingangchips EINC werden als Eingangssignale der Präambledetektionseinrichtung PRDEC, der Fingereinspreizeinrichtung FENT und der Pfadbeobachtungs-/Pfadnachführeinrichtung PBPN zugeführt, deren Ausgangssignale über den Ausgangsschnittstellenblock ASB an einen digitalen Signalprozessor DSP zur weiteren Verarbeitung gelangen.

Die Steuereinrichtung STG liefert jeweils benötigte Steuersignale für die Präambledetektionseinrichtung PRDEC, die Fingerentspreizeinrichtung FENT, die Pfadbeobachtungs-/Pfadnachführeinrichtung PBPN, den Eingangsschnittstellenblock ESB und für den Ausgangsschnittstellenblock ASB.

FIG 5 zeigt eine Tabelle mit Konstanten Alpha und Beta eines bevorzugten Betragsbildungsverfahren für die in den Figuren FIG1 und FIG3 dargestellten Betragsbildungseinrichtungen 801 bzw. 803, wobei das bevorzugt verwendete Betragsbildungsverfahren der Figurenbeschreibung der FIG1 zu entnehmen ist.

**Patentansprüche**

1.  Anordnung zur Funksignalentspreizung bei einem Funkkommunikationssystem mit Code-Vielfachzugriffsverfahren bestehend aus einer Präambledetektionseinrichtung (PRDEC), einer Fingerentspreizeinrichtung (FENT) und einer Pfadbeobachtungs-/Pfadnachführeinrichtung (PBPN), bei der die jeweiligen Einrichtungen jeweils eine Serienschaltung, bestehend aus einer Korrelationseinrichtung (COR1, COR2, COR3) zur Eingangschipentspreizung, einer Rotationseinrichtung (ROT1, ROT2, ROT3) zur Kompensation einer durch einen Empfängerfrequenzoffset verursachten Phasendrehung und einer kohärenten Accumulationseinrichtung (ACC-C1, ACC-C2, ACC-C3) zur Durchführung einer wiederholten kohärenten Addition aufweisen, wobei an jede Serienschaltung als Eingangssignal jeweils aus Antennendaten (AD) der Funksignale gebildete komplexe Eingangschips (EINC) mit einer binären Realteil- und mit einer binären Imaginärteilwortlänge von jeweils N Bit und mit einem jeweils zugeordneten binären Wertebereich W von $-2^{N-1} \leq W \leq 2^{N-1}-1$ angeschaltet sind, **dadurch gekennzeichnet,**

    -   **dass** jede einzelne Korrelationseinrichtung (COR1, COR2, COR3) Mittel zur Durchführung einer gesättigten Signalentspreizung beinhaltet, mit deren Hilfe aus den Eingangschips (EINC) bitbreitenreduzierte komplexe Signale (b100, ..., b300) gebildet werden, die an die jeweils nachgeschaltete Rotationseinrichtung (ROT1, ROT2, ROT3) als Eingangssignale angeschaltet sind,

    -   **dass** jede einzelne Rotationseinrichtung (ROT1, ROT2, ROT3) Mittel zur Durchführung einer gesättigten Signalmultiplikation beinhaltet, mit deren Hilfe aus den Eingangssignalen (b100, ..., b300) der Rotationseinrichtung (ROT1, ROT2, ROT3) bitbreitenreduzierte komplexe Signale (d100, ..., d300) gebildet werden, die an die jeweils nachgeschaltete kohärente Accumulationseinrichtung (ACC-C1, ACC-C2, ACC-C3) als Eingangssignale angeschaltet sind,

    -   **dass** jede einzelne kohärente Accumulationseinrichtung (ACC-C1, ACC-C2, ACC-C3) Mittel zur Durchführung einer gesättigten Bitschiebeoperation beinhaltet, mit deren Hilfe aus den Eingangssignalen (d100, ..., d300) der kohärenten Accumulationseinrichtung (ACC-C1, ACC-C2, ACC-C3) durch wiederholte Addition gebildete komplexe Signale (e100, ..., e300) bitbreitenreduziert werden,

    -   wobei eine Sättigung derart durchgeführt wird, dass einem Binärwert eines komplexen Signals, der einen oberen Grenzwert eines zugeordneten binären Wertebereichs überschreitet, der obere Grenzwert fest zugeordnet wird, und dass dem Binärwert des komplexen Signals, der einen unteren Grenzwert des zugeordneten binären Wertebereichs unterschreitet, der untere Grenzwert fest zugeordnet wird.

2.  Anordnung nach Anspruch 1, **dadurch gekennzeichnet,**

    -   **dass** jede Korrelationseinrichtung (COR1, COR2, COR3) eine Entspreizeinrichtung (101, 102, 103) und eine an Ausgänge der Entspreizeinrichtung angeschaltete Additionseinrichtung (201, 202, 203) aufweist, wobei der Entspreizeinrichtung eingangsseitig sowohl die komplexen Eingangschips (EINC) als auch eine Entspreizsequenz (ENTS1, ENTS2, ENTS3) zugeführt sind.

3.  Anordnung nach Anspruch 2, **dadurch gekennzeichnet, dass** die Entspreizeinrichtung (101, 102, 103) derart ausgestaltet ist, dass durch konjugiert komplexe Multiplikation der Eingangschips (EINC) mit der Entspreizsequenz (ENTS1, ...,ENTS3), die einen zugeordneten Wertebereich W von $W \in \{1+j,-1+j, 1-j, -1-j\}$ aufweist, gebildete komplexe Signale (a100, ..., a363) auf einen binären Wertebereich W von $-2^{N-1} \leq W \leq 2^{N-1}-1$ gesättigt abgebildet werden, wobei beim durch Multiplikation gebildeten Signal ein Least-Significant-Bit verworfen wird.

4. Anordnung nach Anspruch 2 oder 3, **dadurch gekennzeichnet,**

   - **dass** die der Präambledetektionseinrichtung (PRDEC) und die der Pfadbeobachtungs-/ Pfadnachführeinrichtung (PBPN) zugeordnete Entspreizeinrichtung (101, 103) insgesamt $2^{N-2}$ Ausgänge für $2^{N-2}$ komplexe Signale (a100, ..., a163, a300, ..., a363) aufweist, die mit entsprechenden $2^{N-2}$ Eingängen der Additionseinrichtung (20'1) verbunden sind,
   - **dass** die der Präambledetektionseinrichtung (PRDEC) zugeordnete Additionseinrichtung (201) derart ausgebildet ist, dass jeweils $2^{N-6}$ eingangsseitige komplexe Signale (a100, ..., a163) mit Hilfe einer Addition zu jeweils einem komplexen Signal (b100, ..., b115) mit einem sowohl real als auch imaginär zugeordneten binären Wertebereich von $-2^{N+1} \leq W \leq 2^{N+1}-1$ zusammengefasst werden, die eingangsseitig an die Rotationseinrichtung (ROT1) gelangen, und
   - **dass** die der Pfadbeobachtungs-/Pfadnachführeinrichtung (PBPN) zugeordnete Additionseinrichtung (203) derart ausgebildet ist, dass alle eingangsseitigen komplexen Signale (a300, ..., a363) mit Hilfe einer Addition zu genau einem komplexen Signal (b300) mit einem sowohl real als auch imaginär zugeordneten binären Wertebereich W von $-2^{N+5} \leq W \leq 2^{N+5}-1$ zusammengefasst werden, das eingangsseitig an die Rotationseinrichtung (ROT3) gelangt.

5. Anordnung nach Anspruch 1 oder 4, **dadurch gekennzeichnet, dass** die der Präambledetektionseinrichtung (PRDEC) und die der Pfadbeobachtungs-/Pfadnachführeinrichtung (PBPN) zugeordnete Rotationseinrichtung (ROT1, ROT3) für jedes eingangsseitige Signal (b100, ..., b115, b300) eine Multiplikationseinrichtung (301, 303) und eine Bitschiebeeinrichtung (401, 403) aufweist, wobei an die Multiplikationseinrichtung (301, 303) das eingangsseitige Signal (b100, ..., b115, b300) und komplexe Rotationskoeffizienten (ROTK1, ROTK3) mit einem sowohl real als auch imaginär zugeordneten binären Wertebereich W von $-2^{N-1} \leq W \leq 2^{N-1}-1$ angeschaltet sind.

6. Anordnung nach Anspruch 5, **dadurch gekennzeichnet, dass** die der Präambledetektionseinrichtung (PRDEC) zugeordnete Multiplikationseinrichtung (301) und Bitschiebeeinrichtung (401) derart ausgestaltet sind, dass ein durch komplexe Multiplikation des eingangsseitigen Signals (b100, ..., b115) mit den komplexen Rotationskoeffizienten (ROTK1) gebildetes komplexes Signal (c100, ...,

c115) sowohl real als auch imaginär auf einen binären Wertebereich W von $-2^{N+8} \leq W \leq 2^{N+8}-1$ gesättigt abgebildet wird und dass mit Hilfe der Bitschiebeeinrichtung (401) ein komplexes Signal (d100, ..., d115) mit einem sowohl real als auch imaginär zugeordneten binären Wertebereich W von $-2^{N+1} \leq W \leq 2^{N+1}-1$ gebildet wird, das eingangsseitig an die kohärente Accumulationseinrichtung (ACC-C1) angeschaltet ist.

7. Anordnung nach Anspruch 5, **dadurch gekennzeichnet, dass** die der Pfadbeobachtungs-/Pfadnachführeinrichtung (PBPN) zugeordnete Multiplikationseinrichtung (303) und Bitschiebeeinrichtung (403) derart ausgestaltet sind, dass ein durch komplexe Multiplikation des eingangsseitigen Signals (b300) mit den komplexen Rotationskoeffizienten (ROTK3) gebildetes komplexes Signal (c300) sowohl real als auch imaginär auf einen binären Wertebereich W von $-2^{N+12} \leq W \leq 2^{N+12}$ gesättigt abgebildet wird und dass mit Hilfe der Bitschiebeeinrichtung (403) ein komplexes Signal (d300) mit einem sowohl real als auch imaginär zugeordneten binären Wertebereich W von $-2^{N+5} \leq W \leq 2^{N+5}-1$ gebildet wird, das eingangsseitig an die kohärente Accumulationseinrichtung (ACC-C3) angeschaltet ist.

8. Anordnung nach einem der vorhergehenden Ansprüche, **dadurch gekennzeichnet, dass** die der Präambledetektionseinrichtung (PRDEC) und die der Pfadbeobachtungs-/Pfadnachführeinrichtung (PBPN) zugeordnete kohärente Accumulationseinrichtung (ACC-C1, ACC-C3) für jedes eingangsseitige Signal (d100, ..., d115, d300) eine Additionseinrichtung (501, 503), an die das eingangsseitige Signal (d100, ..., d115, d300) angeschaltet ist, und eine seriell nachgeschaltete Bitschiebeeinrichtung (601, 603) sowie einen Zwischenspeicher (511, 513) aufweist, über den ein durch Addition gebildetes Ausgangssignal (e100, ..., e115, e300) der Additionseinrichtung (501, 503) zur Durchführung einer wiederholten Addition an die Additionseinrichtung (501, 503) zurückgeführt ist.

9. Anordnung nach Anspruch 8, **dadurch gekennzeichnet, dass** die der Präambledetektionseinrichtung (PRDEC) zugeordnete Additionseinrichtung (501) und Bitschiebeeinrichtung (601) derart ausgestaltet sind, dass ein durch wiederholte Addition gebildetes komplexes Ausgangssignal (e100, ..., e115) der Additionseinrichtung (501) sowohl real als auch imaginär einen binären Wertebereich W von $-2^{N+7} \leq W \leq 2^{N+7}-1$ aufweist und dass mit Hilfe der Bitschiebeeinrichtung (601) das durch wiederholte Addition gebildete komplexe Signal (e100, ..., e115) auf ein komplexes Signal (f100, f115) mit einem sowohl real als auch imaginär zugeordneten binären Wertebereich W von $-2^{N+1} \leq W \leq 2^{N+1}-1$ gesättigt abgebildet wird, das eingangsseitig an eine der kohärenten Accumulationseinrichtung (ACC-C1) nachgeschalteten Einrichtung zur Fast-Hadamard-Transformation (FHT) angeschaltet ist.

10. Anordnung nach Anspruch 9, **dadurch gekennzeichnet, dass** die Einrichtung zur Fast-Hadamard-Transformation (FHT) derart ausgestaltet ist, dass aus den eingangsseitigen komplexen Signalen (f100, ..., f115) komplexe Signale (g100, ..., g115) gleicher Anzahl gebildet werden, die sowohl real als auch imaginär einen zugeordneten Wertebereich W von $-2^{N+5} \leq W \leq 2^{2+5}-1$ aufweisen und die durch Transformation gebildeten komplexen Signale (g100, ..., g115) eingangsseitig an eine der Einrichtung zur Fast-Hadamard-Transformation (FHT) nachgeschaltete nichtkohärenten Accumulationseinrichtung (ACC-NC1) angeschaltet sind.

11. Anordnung nach Anspruch 8, **dadurch gekennzeichnet, dass** die der Pfadbeobachtungs-/Pfadnachführeinrichtung (PBPN) zugeordnete Additionseinrichtung (503) und Bitschiebeeinrichtung (603) derart ausgestaltet sind, dass ein durch wiederholte Addition gebildetes komplexes Ausgangssignal (e300) der Additionseinrichtung (503) sowohl real als auch imaginär auf einen binären Wertebereich W von $-2^{N+11} \leq W \leq 2^{N+11}-1$ gesättigt abgebildet wird und dass mit Hilfe der Bitschiebeeinrichtung (603) das durch wiederholte Addition gebildete komplexe Signal (e300) auf ein komplexes Signal (f300) mit einem sowohl real als auch imaginär zugeordneten binären Wertebereich W von $-2^{N+7} \leq W \leq 2^{N+7}-1$ gesättigt abgebildet wird, das eingangsseitig an eine der kohärenten Accumulationseinrichtung (ACC-C3) nachgeschalteten nichtkohärenten Accumulationseinrichtung (ACC-NC3) angeschaltet ist.

12. Anordnung nach einem der Ansprüche 1, 10 oder 11, **dadurch gekennzeichnet, dass** die der Präambledetektionseinrichtung (PRDEC) und die der Pfadbeobachtungs-/Pfadnachführeinrichtung (PBPN) zugeordnete nichtkohärente Accumulationseinrichtung (ACC-NC1, ACC-NC3) für jedes eingangsseitige Signal (g100, ..., g115, f300) eine Betragsbildungseinrichtung (801, 803), an die das eingangsseitige Signal (g100, ..., g115, f300) angeschaltet ist, eine der Betragsbildungseinrichtung (801, 803) seriell nachgeschaltete Additionseinrichtung (901, 903) und einen Zwischenspeicher (911, 913) aufweist, über den ein durch Addition gebildetes Ausgangssignal (e100, ..., e115, e300) der Additionseinrichtung (901, 903) zur Durchführung einer wiederholten Addition an die Additionseinrichtung (901, 903) zurückgeführt ist.

13. Anordnung nach Anspruch 12, **dadurch gekenn-**

**zeichnet, dass** die der Präambledetektionseinrichtung (PRDEC) zugeordnete Betragsbildungseinrichtung (801) und Additionseinrichtung (901) derart ausgestaltet sind, dass mit Hilfe der Betragsbildungseinrichtung (801) ein reelles Signal (h100, ..., h115) mit einem zugeordneten binären Wertebereich W von $0 \leq W \leq 2^{N+6}$ gebildet wird und das derart gebildete Signal an die Additionseinrichtung (901) angeschaltet ist, mit deren Hilfe ein nach wiederholter Addition gebildetes reelles Signal (i100, ..., i115) auf einen binären Wertebereich W von $0 \leq W \leq 2^{N+8}$ gesättigt abgebildet wird.

14. Anordnung nach Anspruch 12, **dadurch gekennzeichnet, dass** die der Pfadbeobachtungs-/Pfadnachführeinrichtung (PBPN) zugeordnete Betragsbildungseinrichtung (803) und Additionseinrichtung (903) derart ausgestaltet sind, dass mit Hilfe der Betragsbildungseinrichtung (803) ein reelles Signal (h300) mit einem zugeordneten binären Wertebereich W von $0 \leq W \leq 2^{N+8}$ gebildet wird und das derart gebildete Signal an die Additionseinrichtung (903) angeschaltet ist, mit deren Hilfe ein nach wiederholter Addition gebildetes reelles Signal (i300) auf einen binären Wertebereich W von $0 \leq W \leq 2^{N+8}$ gesättigt abgebildet wird.

15. Anordnung nach Anspruch 2 oder 3, **dadurch gekennzeichnet,**

- **dass** die der Fingerentspreizeinrichtung (FENT) zugeordnete Entspreizeinrichtung (102) genau einen Ausgang aufweist, der mit genau einem Eingang der Additionseinrichtung (202) verbunden ist, und die Fingerentspreizeinrichtung (102) derart ausgebildet ist, dass aus aufeinanderfolgenden Eingangschips (EINC) gebildete komplexe Signale abhängig vom Spreizfaktor mit Hilfe einer Addition zu genau einem komplexen Signal (a200) zusammengefasst und sowohl real als auch imaginär auf einen binären Wertebereich W von $-2^{N-1} \leq W \leq 2^{N-1}-1$ gesättigt abgebildet werden, und

- **dass** die zugehörige Additionseinrichtung (202) derart ausgebildet ist, dass in Abhängigkeit vom Spreizfaktor aufeinanderfolgende komplexe Signale (a200) der Entspreizeinrichtung (102) mit Hilfe einer Addition zu einem komplexen Signal (b200) mit einem sowohl real als auch imaginär zugeordneten binären Wertebereich W von $-2^{N+5} \leq W \leq 2^{N+5}-1$ zusammengefasst werden, und das mit Hilfe der Additionseinrichtung (202) gebildete komplexe Signal (b200) eingangsseitig an die Rotationseinrichtung (ROT2) gelangt.

16. Anordnung nach Anspruch 15, **dadurch gekennzeichnet,**

- **dass** die der Fingerentspreizeinrichtung (FENT) zugeordnete Rotationseinrichtung (ROT2) für das eingangsseitige Signal (b200) eine Multiplikationseinrichtung (302) und eine Bitschiebeinrichtung (402) aufweist, wobei an die Multiplikationseinrichtung einerseits das eingangsseitige Signal (b200) und andererseits komplexe Rotationskoeffizienten (ROTK2) mit einem sowohl real als auch imaginär zugeordneten binären Wertebereich W von - $2^{N-1} \leq W \leq 2^{N-1}-1$ angeschaltet sind,

- **dass** die Multiplikationseinrichtung (302) und die Bitschiebeeinrichtung (402) derart ausgestaltet sind, dass ein durch komplexe Multiplikation des eingangsseitigen Signals (b200) mit den komplexen Rotationskoeffizienten (ROTK2) gebildetes komplexes Signal (c200) auf einen binären Wertebereich W von $-2^{N+12} \leq W \leq 2^{N+12}-1$ gesättigt abgebildet wird, und dass mit Hilfe der Bitschiebeinrichtung (402) ein komplexes Signal (d200) mit einem sowohl real als auch imaginär zugeordneten binären Wertebereich W von $-2^{N+5} \leq W \leq 2^{N+5}-1$ gebildet wird, das eingangsseitig an die kohärente Accumulationseinrichtung (ACC-C2) angeschaltet ist.

17. Anordnung nach Anspruch 16, **dadurch gekennzeichnet,**

- **dass** die der Fingerentspreizeinrichtung (FENT) zugeordnete kohärente Accumulationseinrichtung (ACC-C2) für das eingangsseitige komplexe Signal (d200) eine Additionseinrichtung (502), an die das eingangsseitige komplexe Signal (d200) angeschaltet ist, und eine der Additionseinrichtung (502) nachgeschaltete Bitschiebeeinrichtung (602) sowie einen Zwischenspeicher (512) aufweist, über den ein durch Addition gebildetes Ausgangssignal (e200) der Additionseinrichtung (502) zur Durchführung einer wiederholten Addition an die Additionseinrichtung (502) zurückgeführt ist, und

- **dass** die Additionseinrichtung (502) und Bitschiebeeinrichtung (602) derart ausgestaltet sind, dass ein durch wiederholte Addition gebildetes komplexes Ausgangssignal (e200) der Additionseinrichtung (502) sowohl real als auch imaginär einen binären Wertebereich W von - $2^{N+7} \leq W \leq 2^{N+7}-1$ aufweist und dass mit Hilfe der Bitschiebeeinrichtung (602) das durch wiederholte Addition gebildete komplexe Signal (e200) auf ein komplexes Signal (f200) mit einem sowohl real als auch imaginär zugeordneten binären Wertebereich W von $-2^{N-1} \leq W \leq 2^{N-1}-1$ gesättigt abgebildet wird.

FIG 1

# FIG 2

EP 1 447 915 A1

FIG 3

# FIG 4

EP 1 447 915 A1

# FIG 5

```
========================================================
```
### Alpha * Min + Beta * Max Magnitude Estimator

| Name | Alpha | Beta | Avg Err (linear) | RMS (dB) | Peak (dB) |
|---|---|---|---|---|---|
| Min RMS Err | 0.947543636291 | 0.392485425092 | 0.000547 | -32.6 | -25.6 |
| Min Peak Err | 0.960433870103 | 0.397824734759 | -0.013049 | -31.4 | -28.1 |
| Min RMS w/ Avg=0 | 0.948059448969 | 0.392699081699 | 0.000003 | -32.6 | -25.7 |
| 1, Min RMS Err | 1.000000000000 | 0.323260990000 | -0.020865 | -28.7 | -23.8 |
| 1, Min Peak Err | 1.000000000000 | 0.335982538000 | -0.025609 | -28.3 | -25.1 |
| 1, 1/2 | 1.000000000000 | 0.500000000000 | -0.086775 | -20.7 | -18.6 |
| 1, 1/4 | 1.000000000000 | 0.250000000000 | 0.006456 | -27.6 | -18.7 |
| Frerking | 1.000000000000 | 0.400000000000 | -0.049482 | -25.1 | -22.3 |
| 1, 11/32 | 1.000000000000 | 0.343750000000 | -0.028505 | -28.0 | -24.8 |
| 1, 3/8 | 1.000000000000 | 0.375000000000 | -0.040159 | -26.4 | -23.4 |
| 15/16, 15/32 | 0.937500000000 | 0.468750000000 | -0.018851 | -29.2 | -24.1 |
| 15/16, 1/2 | 0.937500000000 | 0.500000000000 | -0.030505 | -26.9 | -24.1 |
| 31/32, 11/32 | 0.968750000000 | 0.343750000000 | -0.000371 | -31.6 | -22.9 |
| 31/32, 3/8 | 0.968750000000 | 0.375000000000 | -0.012024 | -31.4 | -26.1 |
| 61/64, 3/8 | 0.953125000000 | 0.375000000000 | 0.002043 | -32.5 | -24.3 |
| 61/64, 13/32 | 0.953125000000 | 0.406250000000 | -0.009611 | -31.8 | 26.6 |

```
========================================================
```

**Europäisches Patentamt**

## EUROPÄISCHER RECHERCHENBERICHT

Nummer der Anmeldung

EP 03 00 3439

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 474 488 A (NCR CO) 11. März 1992 (1992-03-11) * Spalte 2, Zeile 35 - Spalte 5, Zeile 27; Ansprüche 1-10; Abbildungen 2A-3 * --- | 1-17 | H04B1/707 |
| A | US 5 506 865 A (WEAVER JR LINDSAY A) 9. April 1996 (1996-04-09) * Spalte 4, Zeile 53 - Spalte 5, Zeile 6; Abbildung 3 * * Spalte 5, Zeile 53 - Spalte 7, Zeile 20 * --- | 1-17 | |
| A | EP 1 156 593 A (INTERDIGITAL TECH CORP) 21. November 2001 (2001-11-21) * Absätze [0135]-[0141]; Abbildung 3 * * Absätze [0165]-[0173]; Anspruch 1; Abbildungen 6-8C * ----- | 1-17 | |

RECHERCHIERTE SACHGEBIETE (Int.Cl.7)

H04B

Der vorliegende Recherchenbericht wurde für alle Patentansprüche erstellt

| Recherchenort | Abschlußdatum der Recherche | Prüfer |
|---|---|---|
| DEN HAAG | 30. Juli 2003 | Nilsson, M |

**ANHANG ZUM EUROPÄISCHEN RECHERCHENBERICHT**
**ÜBER DIE EUROPÄISCHE PATENTANMELDUNG NR.**　　　　　EP 03 00 3439

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-07-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 0474488 | A | 11-03-1992 | DE | 69110802 D1 | 03-08-1995 |
| | | | DE | 69110802 T2 | 14-03-1996 |
| | | | EP | 0474488 A2 | 11-03-1992 |
| | | | JP | 6029982 A | 04-02-1994 |
| | | | US | 5128960 A | 07-07-1992 |
| US 5506865 | A | 09-04-1996 | AT | 180607 T | 15-06-1999 |
| | | | AU | 676249 B2 | 06-03-1997 |
| | | | AU | 5672594 A | 22-06-1994 |
| | | | BR | 9307519 A | 31-08-1999 |
| | | | CA | 2150015 A1 | 09-06-1994 |
| | | | CN | 1091879 A ,B | 07-09-1994 |
| | | | DE | 69325105 D1 | 01-07-1999 |
| | | | DE | 69325105 T2 | 16-12-1999 |
| | | | DK | 671082 T3 | 06-12-1999 |
| | | | EP | 0671082 A1 | 13-09-1995 |
| | | | ES | 2132371 T3 | 16-08-1999 |
| | | | FI | 952468 A | 19-05-1995 |
| | | | GR | 3030720 T3 | 30-11-1999 |
| | | | HK | 1011126 A1 | 05-05-2000 |
| | | | IL | 107710 A | 12-09-1996 |
| | | | JP | 2868901 B2 | 10-03-1999 |
| | | | JP | 8506222 T | 02-07-1996 |
| | | | KR | 252549 B1 | 15-04-2000 |
| | | | MX | 9307373 A1 | 31-05-1994 |
| | | | RU | 2202154 C2 | 10-04-2003 |
| | | | SG | 49142 A1 | 18-05-1998 |
| | | | WO | 9413066 A1 | 09-06-1994 |
| | | | ZA | 9308324 A | 07-06-1994 |
| EP 1156593 | A | 21-11-2001 | EP | 1156593 A2 | 21-11-2001 |
| | | | EP | 1213854 A2 | 12-06-2002 |
| | | | EP | 1237293 A2 | 04-09-2002 |
| | | | EP | 1213845 A2 | 12-06-2002 |
| | | | EP | 1213846 A2 | 12-06-2002 |
| | | | AP | 681 A | 14-09-1998 |
| | | | AP | 682 A | 14-09-1998 |
| | | | AT | 225993 T | 15-10-2002 |
| | | | AT | 209834 T | 15-12-2001 |
| | | | AT | 216826 T | 15-05-2002 |
| | | | AU | 6342996 A | 05-02-1997 |
| | | | AU | 6401396 A | 05-02-1997 |
| | | | AU | 6401596 A | 05-02-1997 |
| | | | CA | 2224706 A1 | 23-01-1997 |
| | | | CA | 2365087 A1 | 23-01-1997 |
| | | | CA | 2376313 A1 | 23-01-1997 |

EPO FORM P0461

Für nähere Einzelheiten zu diesem Anhang : siehe Amtsblatt des Europäischen Patentamts, Nr.12/82

**EP 1 447 915 A1**

## ANHANG ZUM EUROPÄISCHEN RECHERCHENBERICHT
## ÜBER DIE EUROPÄISCHE PATENTANMELDUNG NR.

EP 03 00 3439

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-07-2003

| Im Recherchenbericht angeführtes Patentdokument | Datum der Veröffentlichung | Mitglied(er) der Patentfamilie | Datum der Veröffentlichung |
|---|---|---|---|
| EP 1156593 A | | CA 2376319 A1 | 23-01-1997 |
| | | CA 2376321 A1 | 23-01-1997 |
| | | CA 2378873 A1 | 23-01-1997 |
| | | CA 2378885 A1 | 23-01-1997 |
| | | CN 1192304 A ,B | 02-09-1998 |
| | | DE 1156593 T1 | 02-10-2002 |
| | | DE 1213854 T1 | 28-11-2002 |
| | | DE 1213845 T1 | 28-11-2002 |
| | | DE 1213846 T1 | 28-11-2002 |
| | | DE 69617429 D1 | 10-01-2002 |
| | | DE 69617429 T2 | 08-08-2002 |
| | | DE 69620884 D1 | 29-05-2002 |
| | | DE 69620884 T2 | 07-11-2002 |
| | | DE 69624242 D1 | 14-11-2002 |
| | | DE 69624242 T2 | 26-06-2003 |
| | | DE 835593 T1 | 04-05-2000 |
| | | DE 986186 T1 | 09-11-2000 |
| | | DE 984577 T1 | 09-11-2000 |
| | | DE 986187 T1 | 09-11-2000 |
| | | DE 986188 T1 | 09-11-2000 |
| | | DE 996239 T1 | 09-11-2000 |
| | | DE 991205 T1 | 09-11-2000 |
| | | DK 836770 T3 | 10-02-2003 |
| | | DK 835568 T3 | 18-03-2002 |
| | | EP 1158702 A2 | 28-11-2001 |
| | | EP 0836770 A2 | 22-04-1998 |
| | | EP 0835568 A2 | 15-04-1998 |
| | | EP 0835593 A2 | 15-04-1998 |
| | | EP 0986186 A2 | 15-03-2000 |
| | | EP 0984577 A2 | 08-03-2000 |
| | | EP 0986187 A2 | 15-03-2000 |
| | | EP 0986188 A2 | 15-03-2000 |
| | | EP 0996239 A2 | 26-04-2000 |
| | | EP 0991205 A2 | 05-04-2000 |

Für nähere Einzelheiten zu diesem Anhang : siehe Amtsblatt des Europäischen Patentamts, Nr.12/82